# EUROPEAN PATENT APPLICATION

(11) **EP 1 760 572 A1**
(43) Date of publication of application: **07.03.2007**
(21) Application number: 06016641.0
(22) Date of filing: 09.08.2006
(51) Int. Cl.: G06F 3/048

(54) **Context preservation in a user interface through automated action option presentation**

(30) Priority: 29.08.2005 US 215792
(71) Applicant: SAP AG, 69190 Walldorf (DE)
(72) Inventor: Schultz, Karsten A., Middle Park QLD 4047 (AU); Kissel, Nina, Kelvin Grove QLD 4059 (AU)
(74) Representative: Müller-Boré & Partner Patentanwälte

(57) **Abstract**

An interface system for a computer system includes a detector module to detect a first user action with respect to a data item, the first user action being performed via a user interface. A context module automatically determines contextual data pertaining to the first user action. A presentation module automatically presents, via the user interface, an action option to the user for selection, the action option being automatically identified by an action option module for presentation, based on the contextual data pertaining to the first user action.

## Description

### FIELD

This application relates to a method and system to manage data on a computer system and, in one example embodiment, to a user interface system and method to preserve context for a user-initiated operation performed on a computer system.

### BACKGROUND

Modem operating systems and applications to provide a variety of approaches to support human users in streamlining their work by means of automation and configuration. For example, a number of operating systems provide a "clipboard" feature that provides an intermediate placeholder into which data may be stored for later usage. A user is accordingly able to switch contexts and applications, while preserving data within the clipboard.

With the increasing volume of electronic communications and the exchange of electronic documents and content, users of computer systems are challenged to continually manage a large volume and variety of electronic data items. For example, users are bombarded by electronic data, received by means of email, USB flash drives, CDs/DVDs, network drives etc. In order to manage these electronic data items, operating systems and applications may provide mechanisms whereby users can create organizational data structures (e.g., a hierarchy of folders or other metadata structures) by which electronic data items can be organized by a user. Users of computer systems accordingly may spend time and effort in locating received electronic data items within such an organizational data structure. For example, users typically copy or move files, or groups of files, into a file system structure. Often, as part of such an organizational effort, a user is required to extend the organizational data structure (e.g., a file system structure) by the creation of a new target folder, for example.

A number of technologies (e.g., copy and paste, drag and drop, and drag and relate) are supported by operating systems and applications to simplify the management and organization of electronic data items. Certain users may prefer certain methods of work, in that one user may favour utilizing a copy and paste operation to organize data items, while another user may prefer to perform drag and drop operations.

Nonetheless, the organization of electronic data items on a computer system (e.g., utilizing mechanisms supported by an operating system or an application) require significant manual input by the user. Further, the processing of such manual input by a computer system system and its users, and context switches (e.g., between applications) that result from such manual work, may negatively impact the performance of a computer system and a user.

### SUMMARY

According to an aspect of the invention, there is provided an interface system for a computer system. The interface system includes a detector module to detect a first user action with respect to a data item, the first user action being performed via a user interface. A context module automatically determines contextual data pertaining to the first user action. A presentation module automatically presents, via the user interface, an action option to the user for selection, the action option being automatically identified by an action option module for presentation, based on the contextual data pertaining to the first user action.

According to a further aspect of the invention, there is provided a computer-implemented method to perform a user interface operation on a computer system. The method includes detecting a first user action with respect to a data item, the first user action being performed via a user interface. Contextual data pertaining to the first user action is automatically determined. An action option is automatically presented to the user for selection, the action option being automatically identified for presentation based on the contextual data pertaining to the first user action.

Other features of the present invention will be apparent from the accompanying drawings and from the detailed description that follows.

### BRIEF DESCRIPTION OF DRAWINGS

The present invention is illustrated by way of example and not limitation in the figures of the accompanying drawings, in which like references indicate similar elements and in which:

**Figure 1** is a diagrammatic representation of a program system, in the example form of an operating system, which includes a context preservation module.

**Figure 2** is a flow chart illustrating a method, according to an example embodiment of the present invention, to perform a user interface operation on a computer system.

**Figure 3** shows a series of user interfaces, according to an example embodiment of the present invention, depicting how an action option may be automatically presented to a user within a user interface.

**Figure 4** is a user interface diagram, providing a further example embodiment of the automated presentation of an action option, the action option being identified based on contextual data pertaining to a user action.

**Figure 5** is a flow chart illustrating a further method, according to an example embodiment of the present invention, to freeze and restore context pertaining to a first user action, the completion of which is interrupted by a second user action.

**Figure 6** shows a diagrammatic representation of a machine, in the example form of a computer system within which a set of instructions, for causing the machine to perform any one or more of the methodologies discussed herein, may be executed.

### DETAILED DESCRIPTION

In the following description, for purposes of explanation, numerous specific details are set forth in order to provide a thorough understanding of an embodiment of the present invention. It will be evident, however, to one skilled in the art that the present invention may be practiced without these specific details.

In one example embodiment, a system and method are described which operate to display context-sensitive action options (e.g., by way of action field in a menu) to a user, automatically or at an explicit request of a user. The displayed action options are user-selectable by the user to invoke a data processing operation (e.g., the storage of a file in a file system or other organizational data structure). The presentation (e.g., display) of the one or more action options, and also the user-selection of an action option, in the example embodiment, do not force the user to leave a current context. The data processing operation initiated responsive to user selection of an action option may include an atomic action, or may be a composite operation (e.g., multiple sequential actions). For example, a composite operation may include the actions of (1) creating a new folder; (2) copying an email attachment, included in an email, to the newly created folder; and (3) prompting the user to rename the folder.

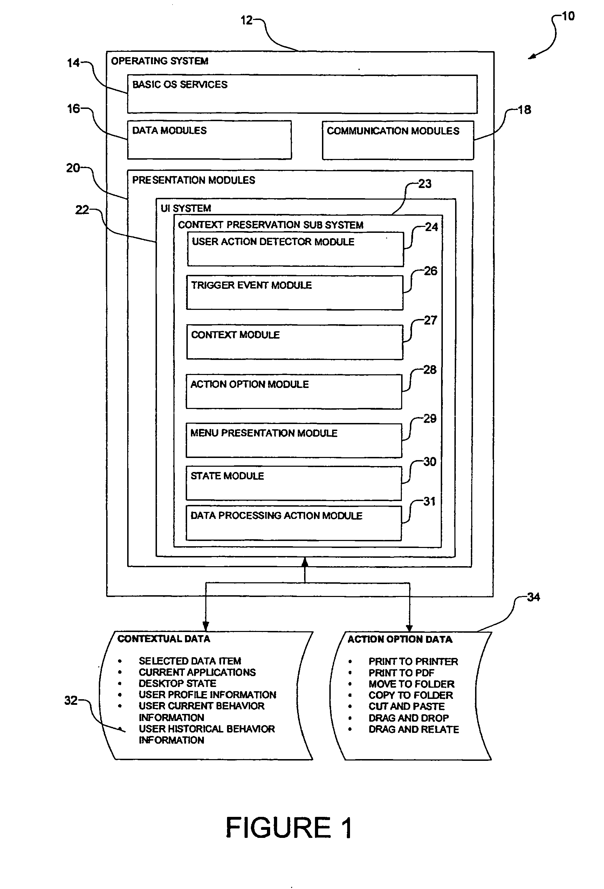

**Figure 1** is a diagrammatic representation of a program system 10 in which an example embodiment of the present invention may be implemented. The program system 10 includes an operating system 12, which in turn includes a collection of basic operating systems services 14, data modules 16, communication modules 18, and presentation modules 20. The presentation modules 20 include a user interface system 22, which in turn includes a context preservation sub system 23. A user action detector module 24, a trigger event module 26, a context module 27, an action option module 28, a menu presentation module 29, a state module 30 and a data processing module 31 form part of the context preservation sub system 23.

The user interface system 22 further has access to, and maintains, both contextual data 32 and action option data 34.

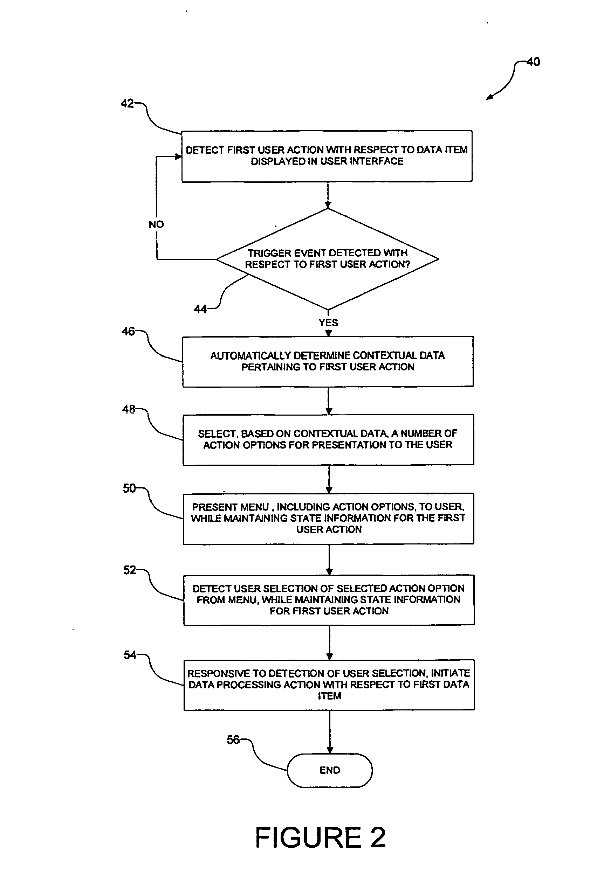

The operation of the user interface system 22, and the various modules and data structures listed in **Figure 1**, will now be described with reference to **Figures 2 - 5.**

Turning first to **Figure 2, Figure 2** is a flow chart illustrating a method 40, according to an example embodiment of the present invention, to perform a user interface operation on a computer system.

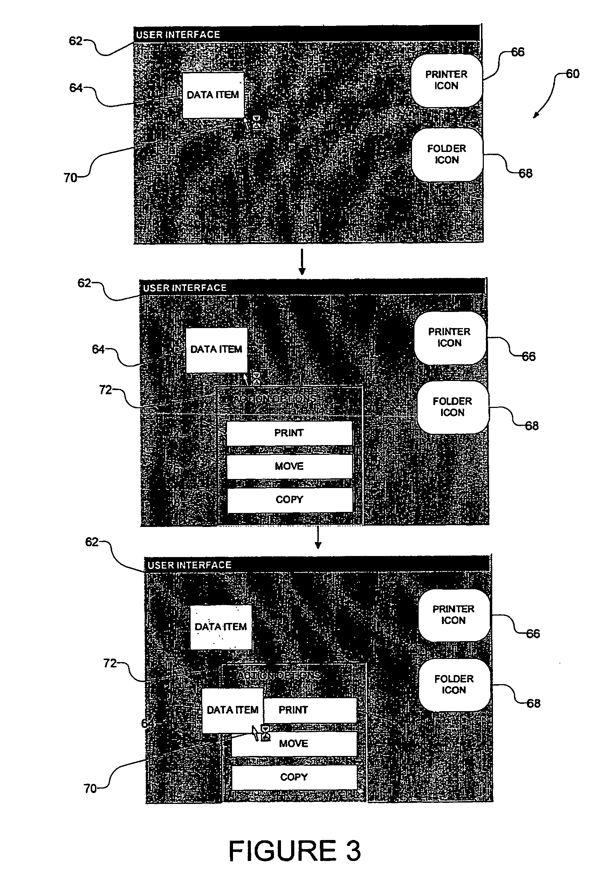

The method 40 commences at block 42 with the detection of a user action with respect to a data item that is displayed in a user interface. An example embodiment of the method 40 is discussed below with reference to a series 60 of screen shots illustrated in **Figure 3**. In the example embodiment, the method 40 is performed by the user interface system 22 of an operating system 12. It will of course be appreciated that, in other example embodiments, the use interface system need not form part of the operating system, but may in fact be a component of an application executing on top of an operating system 12 of a computer system. For example, the operations of the example method 40 may be supported by a user interface system of an email program (e.g., Microsoft® Outlook®).

Returning to the detection of a user action with respect to a data item at block 42, **Figure 3** shows a user interface 62, generated by a user interface system 22 of the operating system 12. Within the user interface 62, a data item is represented by a data item indicator 64. The user interface 62 also includes a printer indicator 66 representative of a printer for which a printer driver may be installed on a host computer system, and a folder indicator 68 representative of a folder defined in terms of a file system structure supported by the operating system 12.

The user interface system 22, which generates the user interface 62, also facilitates navigation of, and input into, the user interface 62 via a pointer indicator 70. The pointer indicator 70 is typically controlled by a pointing device (e.g., a mouse) associated with the host computer system. In the first screen shot of the series 60, the user action detector module 24 detects a user action in the example form of a selection by a user of the data item indicator 64 when the pointer indicator 70 is located, by a user, over the data item indicator (e.g., a sample mouse over), and optionally the user performs a selection operation (e.g., a left or right mouse click) with respect to the data item indicator 64.

At decision block 44, the trigger event module 26 of the user interface system 22 determines whether a trigger event is detected with respect to the first user action. In one embodiment, the trigger event module 26 operates to automatically detect a trigger event.

Considering the automatic detection of the trigger event, a user may (after having initiated the first user action of selecting the data item indicator 64) hesitate for a predetermined time. Such hesitation may indicate user uncertainty regarding how to complete the operation that the user commenced by performing the first user action. For example, the user may, within the user interface 62, have selected the data item indicator 64 for the purposes of printing the underlying data item, or may alternatively have selected the data item indicator 64 for the purposes of moving (or copying) the underlying data item into a folder represented by the folder indicator 68. In the example scenario, the user may have hesitated for a predetermined time period as a result of uncertainty regarding how to complete a desired operation (e.g., a print, move or copy operation). Consider that the user may be particularly inexperienced with respect to navigation of the user interface, as presented by a particular operating system 12. The trigger event module 26, in the example embodiment, is shown to include a timer 25 utilized to measure the duration of a user hesitation, thereby enabling the trigger event module 26 to determine whether the duration of the user hesitation exceeds a predetermined threshold.

In any event, returning to **Figure 2**, a trigger event having been detected at decision block 44, the method 40 progresses to block 46. At block 46, the user interface system 22 automatically determines contextual data 32, pertaining to the first user action detected at block 42.

**Figure 1** provides examples of contextual data 32. Specifically, the contextual data may include the identification of the type of data item associated with the data item indicator 64. For example, where the underlying data item is a textual electronic document, the identification of the data item type may be automatically determined and stored at block 46. Further, contextual data that may be determined at block 46 is the identification of applications that are currently executing on, or that are stored within memory access associated with, a computer system. Further contextual data 32 may include the state of a "desktop" that is presented by the user interface 62. For example, the fact that the printer indicator 66 and the folder indicator 68 are located on a "desktop" may be determined as contextual data 32. Other contextual data 32 may include user profile information (e.g., explicit or implicit preferences associated with the user, and a level of computer literacy of the user), user current behaviour information (e.g., a history of actions performed by the user during a current use session), and user historical behaviour information (e.g., a history of user actions and operations performed in previous use sessions).

The contextual data 32 that is determined may, in one example embodiment, also be dependent upon the type of first user action that is detected at block 42. For example, different contextual data 32 may be determined for a first type of user action than is determined for a second type of user action. The determination of contextual data 32 may also include certain dependencies. For example, the identification of a particular contextual fact may lead to the determination of specified types of contextual information, but the ignoring of other contextual information.

At block 48, the action option module 28 of the user interface system 22 selects, based on contextual data 32, any number of action options for presentation to the user. The selected action options are selected from the action options reflected in the action option data 34.

At block 50, the menu presentation module 29 presents a menu 72, including a number of action options, to a user via the user interface, while maintaining state information for the first user action.

Referring to **Figure 3**, the presentation of the action options may include the display of one or more visual indicators, each of which is user selectable, to initiate performance of a respective data processing operation with respect to the underlying data item. In one embodiment, each of the visual indicators may comprise an entry within a menu of visual indicators.

Returning to **Figure 3**, for example, responsive to the user action of selecting the data item indicator 64, and the detection of a trigger event, a menu 72 of action options 74 - 78 may be presented by the menu presentation module 29. The action options 74 - 78 that are included within the menu 72 are, as noted above, selected by the action option module 28 based on the contextual data.

Consider for example, where the underlying data item is a text document, and that the "desktop" presented by the user interface 62 includes the printer indicator 66 and the folder indicator 68. The action option module 28, utilizing this contextual data 32, may accordingly identify a "print to printer" action option represented by a print indicator 74, a "move to folder" action option represented by a move indicator 76, and a "copy to folder" action option represented by a copy indicator 78 for presentation to a user.

From the example presented in **Figure 3**, the action options presented within the menu 72 are automatically determined, by the action option module 28, based on contextual data pertaining to the first user action of selecting the data item indicator 64, as displayed in the user interface 62. Consider that, had the underlying data item been an audio file, the action options presented in the menu 72 may be different. For example, notwithstanding the presence of a printer indicator 66 on the desktop, the "print to printer" action option would not be included within the menu 72. Instead, in this example use scenario, the menu 72 may include a "play audio file" option, in addition to the "move to folder" and "copy to folder" action options.

Further, in the example, selection of the "move to folder" and "copy to folder" action options may have been identified by the action option module 28 based on the above described user profile information, user current behaviour information, or user historical behaviour information. For example, the contextual data 32 may reflect that the relevant user, when previously dealing with a text data item, had moved the relevant data item to a folder, as opposed to deleting the data item. Because of the relevant user's history of performing a certain type of action, a corresponding action item may be included in the menu 72.

It should be noted that the user interface system 22, while performing the operations at blocks 44 - 50, maintains state information for the first user action of a user-initiated operation. The state information is maintained by the state module 30. Returning to the example of **Figure 3**, where the user has selected the data item indicator 64 utilizing the pointer indicator 70, the selection of the data item indicator 64, as an example of state information, is maintained during the performance of the operations performed at blocks 44 - 50.

Other examples of state information for a first user action that may be maintained by the state module 30 include any state information pertaining to a selected data item (e.g., a select and hold, a select and drag, or a select and relate operation). Further state information for the first user action may be the states of other operations that are being performed by the computer system, at the time of the first user action. Accordingly, the state information that is maintained by the state module 30 may relate directly to a state that was invoked as a result of the first user action, or may include state information regarding another action or process at the time of the first user action.

Return to **Figure 2,** at block 52, the data processing module 31 detects user selection of an action option from the menu 72 displayed at block 50. Again, the state module 30 may operate to maintain state information for the first user action during the detection of user selection. **Figure 3** shows an example of how user selection of an action option from the menu 72 may occur. As shown in the last screen shot of the series 60, a user, utilising the pointer indicator 70, may drag and drop the data item indicator 64 onto the print indicator 74 of the menu 72. This "drag and drop" operation constitutes an example of the selection, by the user, of an action option from the menu presented at block 50.

At block 54, responsive to the detection by the data processing module 31 of user selection of the selected action option, the data processing module 31 initiates a data processing action with respect to the first data item. For example, the data processing module 31 may initiate a print operation with respect to a data item underlying the data item indicator 64.

The data processing action that is initiated by the data processing module 31 may be an atomic action, or a composite operation comprising a sequence of actions. Continuing the example shown in **Figure 3**, when a print process is initiated, it may be that more than one printer is available to the relevant computer system. In this case, the user interface system 22 may generate a dialogue box (not shown) presenting a list of printers at which the data item may be printed, the dialogue box further prompting the user to select a printer.

Similarly, had the user selected a "move to folder" action option, as represented by the move indicator 76, a dialogue box may present a list of folders to which the user may wish to move the data item, or may ask the user whether the user wishes to create a new folder. Should the user then select a "create new folder" option, the user may be presented with a field into which a user can type a name of the new folder to be created.

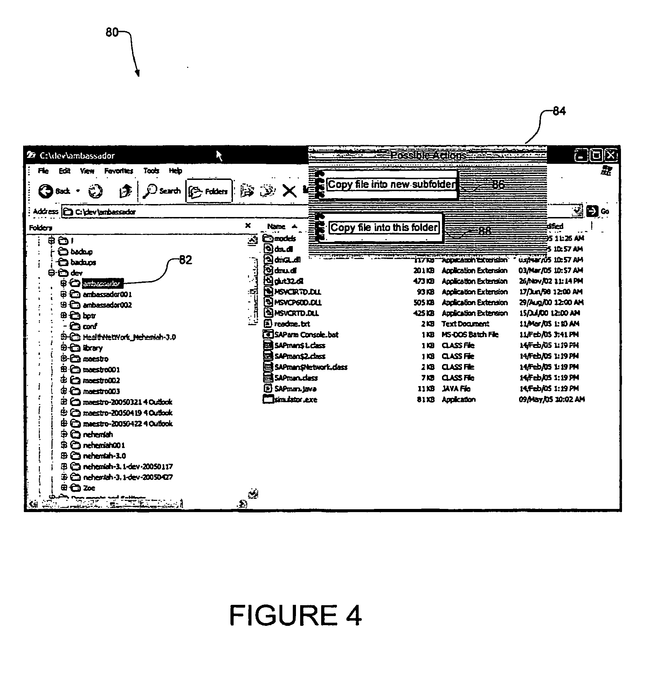

**Figure 4** illustrates a screen shot 80 showing a further example use scenario, in which a user has selected, as an example of a first user action, a particular file. Responsive to a trigger event, a menu 84 of action options is presented. The exemplary action options include "copy file to new sub folder" action option 86, and "copy file to this folder" action option 88. The action option 86 may have been identified by the action option module 28 for presentation to a user based on the selection of a particular file (not shown), and a previous user's selection of an "ambassador" folder 82 within a list of folders. Accordingly, the previous selection of the "ambassador" folder 82 provides an example of contextual data 32 that may have been detected at block 46, and based on which the identification of an action option was made.

By way of a further example, consider the typical situation of copying an email attachment to a file server, or a local hard disk drive, via a drag and drop operation from an email program. In this situation, the method 40 may be executed to prevent the user from having to switch context (e.g., an email application context) to a further context (e.g., a file manager context) for the creation of a target folder that does not yet exist. Specifically, the method 40 may implement a process whereby the user identifies the relevant email attachment, within the email application, and drags the email attachment to a file manager application. The user then utilizes the file manager application to navigate to a place in the file system to which the email attachment is to be copied. Upon determining that a desired target folder does not exist, the user may at this point hesitate, this hesitation for a predetermined amount of time being recognized as a trigger event.

The user interface system 22 may in this situation identify a number of action options based on the determined contextual data, and present a menu of such action options to the user. One such action option may be a "copy file to new sub folder" action option. The user may then drop the relevant email attachment into a visual indicator associated with the "copy file into new sub folder" action option. The user interface system 22 may then create a new folder, and copy the email attachment into this new folder. The user interface system 22, as a next sequential step in the example data processing operation, may prompt the user to name the newly created folder.

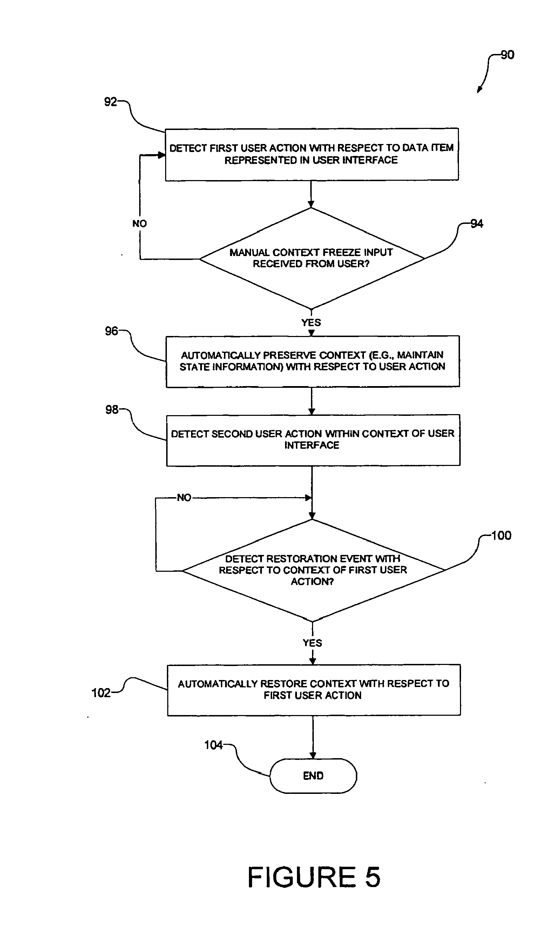

**Figure 5** is a flow chart illustrating a method 90, according to a further example embodiment of the present convention, to preserve context within a user interface. The method 90 may again be performed by a user interface system 22, which forms part of an operating system 12 or an application that executes on top of the operating system 12.

The method 90 commences at block 92, with the detection of the first user action with respect to a data item represented in a user interface.

At decision block 94, a determination is made as to whether a manual "context freeze" input is received from a user. For example, a user may have commenced a certain data processing operation (e.g., an attachment save operation within the context of an email application), but wish to perform an operation within the context of a further application prior to completing the operation commenced by the first user action. At this point, the user may provide "context freeze" input to the user interface system 22. Such a "context freeze" input could be selection of an appropriate indicator presented within the user interface, or the execution of a specified key sequence, merely for example.

Responsive to the detection of "context freeze" input from a user, the method 90 progresses to block 96, where the user interface system 22, and specifically the state module 30, operates to preserve context (e.g., by saving state information) with respect to the user action. Again, the preservation of context with respect to the first user action may involve maintaining a selection operation (and possibly associated hold or move operation) with respect to a data item.

At block 98, the user may then perform a second user action within the context of a user interface. For example, the user may perform the second user action within the context of a different application. Alternatively, the second user interaction may be within the context of the same user interface as the first user action, but with respect to a second data item. For example, the user may have select and drag an indicator, then initiate a context freeze, and then initiate a drag and drop operation with respect to a second data item.

At decision block 100, a determination is made as to whether a context restoration event, with respect to the context of the first user action, is detected. Such a restoration event may, for example, be the completion of an operation that was initiated by the second user action. Alternatively, the restoration event may be a "restore" input received from the user into the user interface, or via some other input mechanism (e.g., a keyboard). Upon detection of a restoration event at decision block 100, the method 90 progresses to block 102, where the context, with respect to the first user action, is automatically restored. The method 90 then terminates at block 104.

In conclusion, it will be appreciated that the above discussed example methods enable, in example use scenarios, context preservation in a file management system through the presentation of action options. Embodiments of the invention provide advantages in that they may assist novice or inexperienced users of the computer system in performing certain basic operations, and may also assist advanced users to quickly navigate to an action option. By facilitating the automated presentation of action options, based on contextual information, embodiments of the invention may reduce load on a processor (and other components of the computer system) that result from frequent context switches.

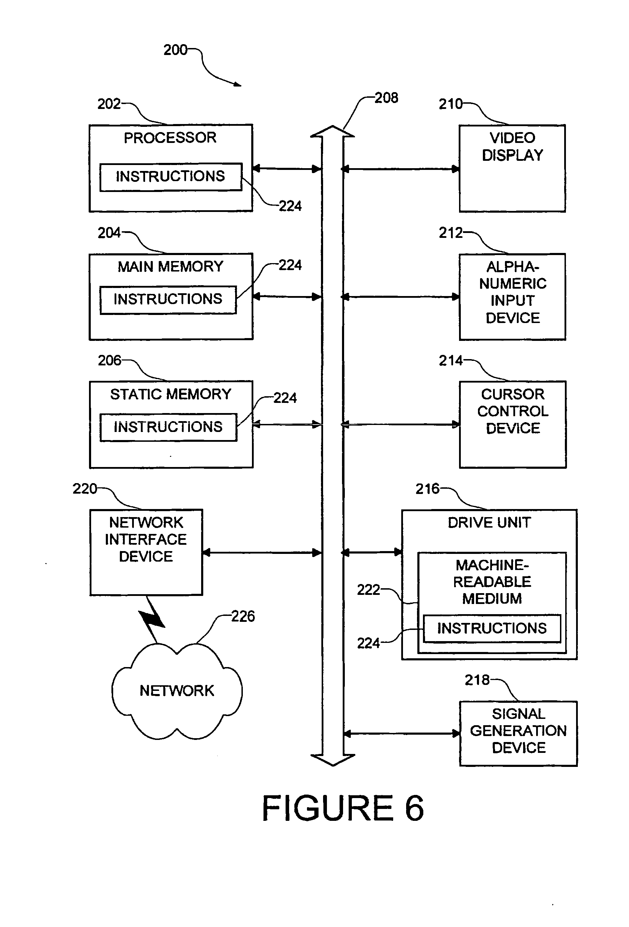

**Figure 6** shows a diagrammatic representation of machine in the example form of a computer system 200 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 200 includes a processor 202 (e.g., a central processing unit (CPU), a graphics processing unit (GPU) or both), a main memory 204 and a static memory 206, which communicate with each other via a bus 208. The computer system 200 may further include a video display unit 210 (e.g., a liquid crystal display (LCD) or a cathode ray tube (CRT)). The computer system 200 also includes an alphanumeric input device 212 (e.g., a keyboard), a user interface (UI) navigation device 214 (e.g., a mouse), a disk drive unit 216, a signal generation device 218 (e.g., a speaker) and a network interface device 220.

The disk drive unit 216 includes a machine-readable medium 222 on which is stored one or more sets of instructions and data structures (e.g., software 224) embodying or utilized by any one or more of the methodologies or functions described herein. The software 224 may also reside, completely or at least partially, within the main memory 204 and/or within the processor 202 during execution thereof by the computer system 200, the main memory 204 and the processor 202 also constituting machine-readable media.

The software 224 may further be transmitted or received over a network 226 via the network interface device 220 utilizing any one of a number of well-known transfer protocols (e.g., HTTP).

While the machine-readable medium 222 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention, or that is capable of storing, encoding or carrying data structures utilized by or associated with such a set of instructions. The term "machine-readable medium" shall accordingly be taken to include, but not be limited to, solid-state memories, optical and magnetic media, and carrier wave signals.

Although an embodiment of the present invention has been described with reference to specific example embodiments, it will be evident that various modifications and changes may be made to these embodiments without departing from the broader spirit and scope of the invention. Accordingly, the specification and drawings are to be regarded in an illustrative rather than a restrictive sense.

## Claims

1. An interface system for a computer system, the interface system including:
a detector module to detect a first user action with respect to a data item, the first user action being performed via the user interface;
a context module automatically to determine contextual data pertaining to the first user action; and
a presentation module automatically to present, via the user interface, an action option to the user for selection, the action option being automatically selected by the presentation module for presentation based on the contextual data pertaining to the first user action.

2. The interface system of claim 1, including a state module to maintain state information for the first user action while presenting the action option, and while detecting user selection of the action option.

3. The interface system of claim 1 or 2, wherein the first user action includes selection of the data item for a user interface supported operation.

4. The interface system of claim 3, wherein the user interface supported operation includes at least one of a group of operations including a copy and paste operation, a cut and paste operation, a drag and drop operation, and a drag and related operation.

5. The interface system of anyone of the preceding claims , wherein the context module is to determine the context data based on at least one of a group of factors including a type of the data item, at least one application executable by the computer system, profile information relating to the user, current user behavior information, historical user behavior information, and user interface state information.

6. The interface system of anyone of the preceding claims , wherein the presentation module is to automatically present the action option responsive to a trigger event.

7. The interface system of claim 6, wherein the trigger event is automatically detected by the presentation module;
is associated with the first user action; or
comprises a second user action.

8. The interface system of anyone of the preceding claims , wherein the action option is for the performance of a data processing operation with respect to the data item, the system including a data processing module to perform the data processing operation.

9. The interface system of claim 8 , wherein the presentation module is to display a visual indicator that is a user selectable to initiate performance of the data processing operation with respect to the data item.

10. The interface system of claim 9 , wherein the visual indicator comprises an entry within a menu of visual indicators, each associated with a respective data processing operation, that is presented to the user wire the use interface.

11. The interface system of anyone of claims 1 to 8, wherein the presentation module is to present a plurality of action options to the user for selection, the plurality of action options being automatically selected based on the contextual data pertaining to the first user action; and/or
to selected the plurality of action options from a group of action options stored by the computer system.

12. A computer-implemented method to perform a user interface operation on a computer system, the computer-implemented method including:
detecting a first user action with respect to a data item, the first user action being performed via the user interface;
automatically determining contextual data pertaining to the first user action;
and
automatically presenting, by the user interface, an action option to the user for selection, the action option being automatically selected for presentation based on the contextual data pertaining to the first user action.

13. The computer-implemented method of claim 12 , including maintaining state information for the first user action while presenting the action option, and while detecting user selection of the action option.

14. The computer-implemented method of claim 12 or 13 , wherein the first user action includes selection of the data item for a user interface supported operation.

15. The computer-implemented method of claim 14 , wherein the user interface supported operation includes at least one of a group of operations including a copy and paste operation, a cut and paste operation, a drag and drop operation, and a drag and related operation.

16. The computer-implemented method of anyone of claims 12 to 15, wherein the contextual data is determined based on at least one of a group of factors including a nature of the data item, at least one application executable by the computer system, profile information relating to the user, current user behavior information, historical user behavior information, and user interface state information.

17. The computer-implemented method of anyone of claims 12 to 16 , wherein the presentation of the action option occurs responsive to a trigger event.

18. The computer-implemented method of claim 17 , wherein the trigger event is automatically detected by the computer system;
is associated with the first user action; and/or
comprises a second user action.

19. The computer-implemented method of anyone of claims 12 to 18 , wherein the action option is for the performance of at least one data processing operation of the with respect to the data item.

20. The computer-implemented method of claim 19 , wherein the data processing operation is an atomic action; and/or includes an automatic performance of a sequence of actions.

21. The computer-implemented method of claim 12 , wherein the presenting of the action option includes displaying, via the user interface, a visual indicator that is a user selectable to initiate performance of a data processing operation with respect to the data item.

22. The computer-implemented method of claim 21, wherein the visual indicator comprises an entry within a menu of visual indicators, each entry being associated with a respective data processing operation.

23. The computer-implemented method of anyone of claims 12 to 22 , including presenting a plurality of action options to the user via the user interface, the plurality of action options being automatically selected based on the contextual data pertaining to the first user action.

24. The computer-implemented method of anyone of claims 12 to 23 , wherein the selecting of the action option is performed from a group of action options stored by the computer system.

25. A machine readable medium storing a set of instructions that, when executed by a machine, cause machine to perform the method of anyone of claims 12 to 24.
